# EUROPÄISCHE PATENTSCHRIFT

(11) **EP 0 853 812 B1**
(45) Veröffentlichungstag und Bekanntmachung des Hinweises auf die Patenterteilung: **19.05.1999**
(21) Anmeldenummer: 96938953.5
(22) Anmeldetag: 26.09.1996
(51) Int. Cl.: H01H 13/70, H01H 11/00, B29C 45/38

(54) **VERFAHREN UND VORRICHTUNG ZUR ENDMONTAGE EINER COMPUTER-TASTATUR**
METHOD AND DEVICE FOR THE FINAL ASSEMBLY OF A COMPUTER KEYBOARD
PROCEDE ET DISPOSITIF DESTINE AU MONTAGE FINAL D'UN CLAVIER D'ORDINATEUR

(30) Priorität: 05.10.1995 DE 19537142; 05.10.1995 DE 19537143
(43) Veröffentlichungstag der Anmeldung: 22.07.1998
(73) Patentinhaber: Siemens Nixdorf Informationssysteme AG, 33106 Paderborn (DE)
(72) Erfinder: WANDINGER, Franz, D-81825 München (DE); WAGNER, Peter, D-96476 Rodach (DE)
(74) Vertreter: Epping, Wilhelm, Dr.-Ing.
(86) Internationale Anmeldenummer: DE9601842
(87) Internationale Veröffentlichungsnummer: WO9713265

(56) Entgegenhaltungen:
- DE-A- 3 808 567
- US-A- 3 947 210
- US-A- 4 831 719

## Beschreibung

Die Erfindung betrifft eine Spritzgießform gemäß den Merkmalen des Oberbegriffs des Anspruchs 1.

Es sind bereits Spritzgießwerkzeuge bekannt, bei denen gleichzeitig mehrere Formstücke gemeinsam in einem einzigen Spritzgießvorgang hergestellt und die zwischen den einzelnen Formstücken mitgespritzten Verbindungskanäle anschließend wieder abgetrennt werden. Wenn die einzelnen Formteile in einer vorgegebenen Zuordnung gespritzt werden und diese Zuordnung im Hinblick auf die anschließende Montage erhalten bleiben soll, ist ein derartiger Abtrennprozeß unter Umständen sehr aufwendig und kompliziert. Ein im Hinblick auf die zu lösende Aufgabe typisches Beispiel ist die Herstellung der Tastenkörper einer Computer-Tastatur mit dem Ziel, sämtliche Tastenkörper in einem gemeinsamen Arbeitsgang entsprechend ihrer jeweiligen Zuordnung im Tastaturgehäuse auszuformen, damit sie unter Beibehaltung ihrer räumlichen Anordnung unmittelbar in das Tastaturgehäuse eingesetzt werden können. Der Spritzgießvorgang für ein derartiges Tastenfeld ist insofern kompliziert, weil wegen des engen gegenseitigen Abstandes zwischen den einzelnen Tastenreihen nicht jeder Tastenreihe ein eigener Angußkanal zugeordnet werden kann. Aus diesem Grund müssen zwei bis drei Tastenreihen kaskadenartig gespritzt werden mit der Folge, daß zwischen den Tastenkörpern benachbarter Reihen zum Zwecke des Materialflusses Verbindungskanäle gebildet werden müssen, die anschließend wieder entfernt werden müssen.

Eine Vorrichtung zur Herstellung von Tastenkörpern mit dem Ziel, sämtliche Tastenkörper in einer der Anordnung im Tastaturgehäuse entsprechenden räumlichen Zuordnung in einem gemeinsamen Arbeitsgang auszuformen, ist aus US-A-4 831 719 bekannt. Zur Trennung der einzelnen Tastenkörper sind im unteren Werkzeugteil der Spritzgießform elastische Federelemente vorgesehen, die mittels in einer zusätzlichen Trägerplatte vorgesehener Zapfen in das obere Werkzeugteil vordringen und dabei die zwischen den Formteilen verbliebenen Spritzmassen-Rückstände absprengen.

Der vorliegenden Erfindung liegt die Aufgabe zugrunde, eine Spritzgießform für die Herstellung einer Vielzahl von Formteilen so auszubilden, daß die Abtrennung der zwischen den Formteilen verbleibenden Spritzmassen-Rückstände möglichst einfach bewerkstelligt werden kann.

Diese Aufgabe wird erfindungsgemäß durch die Merkmale des Anspruchs 1 gelöst. Vorteilhafte Weiterbildungen der Erfindung sind in Unteransprüchen angegeben.

Im folgenden wird ein Ausführungsbeispiel der Erfindung anhand der Zeichnung näher erläutert.

Dabei zeigen
- Figur 1: den prinzipiellen Aufbau einer erfindungsgemäß ausgebildeten Vorrichtung zur Endmontage einer Computer-Tastatur,
- Figur 2: einen Ausschnitt aus einer Tastaturanordnung und
- Figuren 3, 4, 5 und 6: je eine Schnittdarstellung entlang der Schnittlinie III...VI-III...VI für ein Spritzgießwerkzeug in vier aufeinander folgenden Verfahrensschritten zur Herstellung einer Tastaturanordnung gemäß Figur 2.

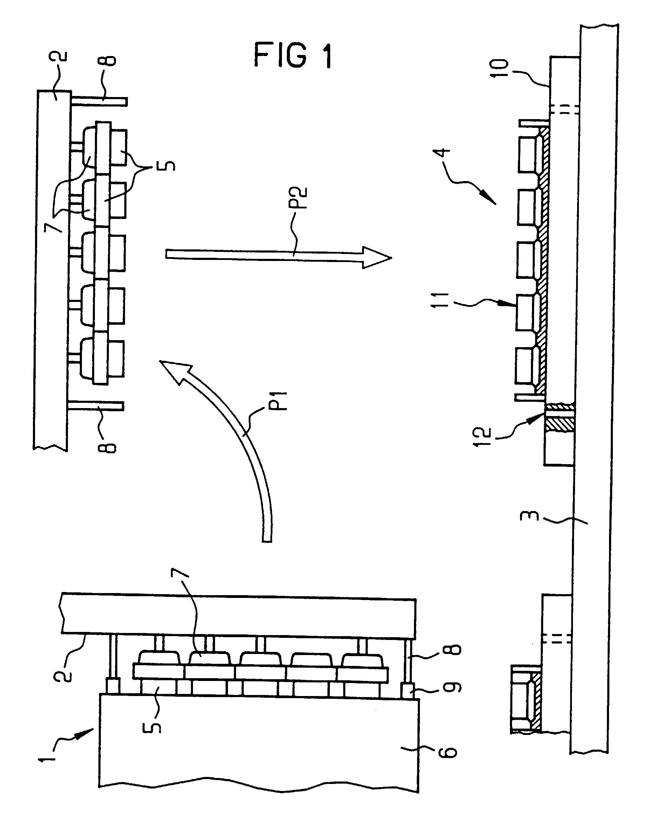

Die Figur 1 zeigt das Prinzip einer Vorrichtung, anhand der ein Verfahren zur Endmontage einer Computer-Tastatur durchführbar ist. Sie zeigt, jeweils in einer Schnittdarstellung einen Ausschnitt einer Spritzgießmaschine 1, eine Entnahme- und Transportvorrichtung 2 und ein Montageband 3 für vormontierte Tastaturgehäuse 4. In der Spritzgießmaschine 1 werden sämtliche Tastenkörper für das Tastaturgehäuse 4 in einem gemeinsamen Spritzgießvorgang in der durch das Tastaturgehäuse 4 vorgegebenen Anordnung gespritzt. Nach Beendigung des Spritzvorgangs werden Düsenteil (in der Zeichnung nicht dargestellt) und Auswerferteil 6 des Spritzwerkzeugs voneinander getrennt. Die mit der Tastenkappenoberseite aus den Auswerferteil 6 vorstehenden Tastenkörper 5 werden von der aus mehreren Saugköpfen 7 bestehenden Entnahmevorrichtung 2 angesaugt. Die exakte Führung der Entnahmevorrichtung 2 erfolgt mittels voreilender Zentrierstifte 8, die in Zentrierbuchsen 9 des Auswerferteils 6 eintauchen. Durch das Ansaugen der einzelnen Tastenkörper 5 werden die während des Spritzvorgangs zwischen den einzelnen Tastenkörpern 5 im Bereich der Tastenkappenunterkante vorhandenen Verbindungskanäle abgetrennt. Hierzu sind im Auswerferteil 6 entsprechende Rückhalteelemente (in der Figur nicht dargestellt) vorgesehen. Die Entnahmevorrichtung 2 schwenkt nun zusammen mit den angesaugten Tastenkörpern 5 in Pfeilrichtung P1 vom Auswerferteil 6 weg und senkt sich anschließend in Pfeilrichtung P2 auf ein über das Montageband 3 auf einem Werkstückträger 10 bereitgestelltes Tastaturgehäuse 4 ab, wobei die einzelnen Tastenkörper 5 lagerichtig in die entsprechenden Tastenführungen 11 des Tastaturgehäuses 4 eintauchen. Die exakte Justierung erfolgt auch hier mittels der voreilenden Zentrierstifte 8, die in entsprechende Zentrierbuchsen 12 im Werkstückträger 10 eintauchen.

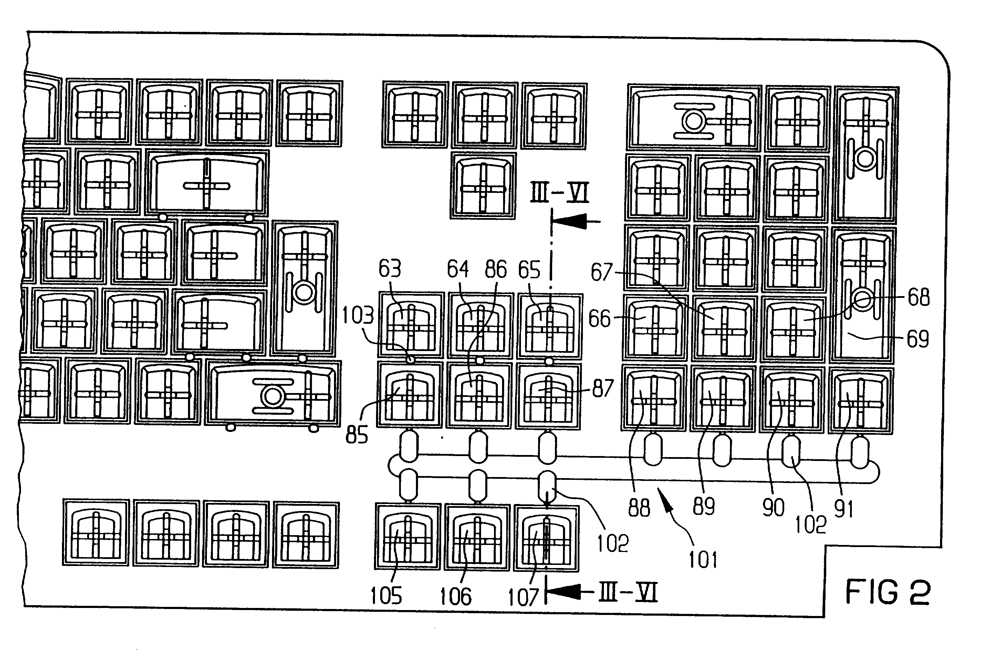

Die Figur 2 zeigt einen Ausschnitt aus einem Tastenfeld für eine Computer-Tastatur mit einer Vielzahl von reihenweise angeordneten Tasten. Sämtliche Tasten dieses Tastenfeldes werden in einem gemeinsamen Spritzgießvorgang gleichzeitig hergestellt, wobei jeweils mehrere Tastenkörper gruppenweise über je einen Angußkanal ausgeformt werden. In der Figur 2 ist symbolartig dargestellt, wie beispielsweise die Tastenkörper mit den Nummern 63 bis 69, 85 bis 91 und 105 bis 107 mit dem Angußkanal 101 verbunden sind und zwar teils direkt über einzelne Querstege 102 und teils indirekt über Verbindungskanäle 103 zwischen den Tastenkörpern benachbarter Tastenreihen.

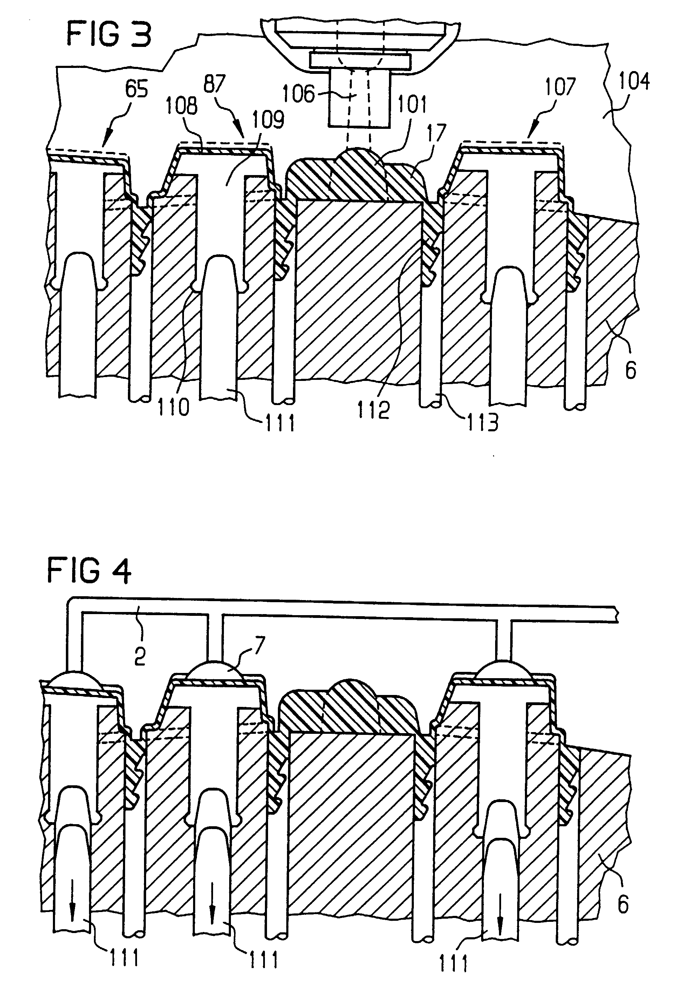

Einzelheiten dieses Spritzgießvorgangs sind am Beispiel der Tastenkörper mit den Nummern 65, 87 und 107 aus den Schnittdarstellungen der Figuren 3 bis 6 längs der Schnittlinie III...VI-III...VI in Figur 2 ersichtlich. Dabei zeigt die Figur 3 das Spritzgießwerkzeug mit dem Düsenteil 104 und dem Auswerferteil 6 in geschlossenem Zustand. Der Materialfluß erfolgt, ausgehend von der Einspritzdüse 106 und dem Angußkanal 101, über je einen Verbindungskanal 17 in die Formbereiche für die Tastenkörper 107 und 87 und über einen weiteren Verbindungskanal vom Tastenkörper 87 zum Tastenkörper 65. Die Formbereiche für die jeweiligen Tastenkörper sind im Spritzgießwerkzeug so angeordnet, daß sich die Tastenkappe 108 vollständig im Düsenteil 104 und der angeformte Tastenstößel 109 teils im Düsenteil 104, teils im Auswerferteil 6 befin6 liegt in Höhe der Tastenkappenunterkante. Der Formbereich der Tastenstößel 109 ist an dem der Tastenkappe 108 abgewandten Ende mit diametral einander gegenüberliegenden Ausbuchtungen für anzuformende Rasthaken 110 versehen. Der Tastenstößel 109 besteht vorzugsweise aus zwei kreuzweise angeordneten Doppelstegen, wobei der eine, in der Figur sichtbare Doppelsteg mit den Rasthaken 110 versehen ist, während der senkrecht dazu verlaufende, wegen der Schnittdarstellung nicht sichtbare Doppelsteg mit seinen Außenkanten zur Führung des Stößels in Führungsnuten der zugehörigen Tastenführung im Tastaturgehäuse dient. Im Endabschnitt des Stäßelformbereichs ist ferner ein axial zur Stäßelachse ein- und ausfahrbarer Formstift 111 vorgesehen, der den zentralen Endbereich des Tastenstößels 109 entsprechend ausspart. Die zwischen Angußkanal 101 und Tastenkörper 87 bzw. 107, sowie zwischen Tastenkörper 87 und 65 vorhandenen Verbindungskanäle, sind als Füllzylinder 112 ausgebildet, in denen jeweils ein mit Rückhalteelementen versehener Auswerferstift 113 geführt ist.

Sobald die einzelnen Formbereiche des geschlossenen Spritzgießwerkzeugs mit Material gefüllt sind, und das Spritzgießwerkzeug ausreichend abgekühlt ist, werden, wie in Figur 4 dargestellt, Düsenteil 104 und Auswerferteil 6 voneinander getrennt. In das geöffnete Werkzeug wird nun eine Entnahmevorrichtung 2 eingeführt, die aus mehreren Saugköpfen 7 besteht und sich jeweils an der nunmehr freiliegenden Oberseite der Tastenkappen festsaugt. Bevor die Tastenkörper aus dem Werkzeug entnommen werden, müssen die Formstifte 111 in Pfeilrichtung zurückgefahren werden, damit die angeformten Rasthaken 110 der Tastenstößel 109 aus den entsprechenden Ausbuchtungen des Formbereichs durch Zurückfedern herausgleiten können.

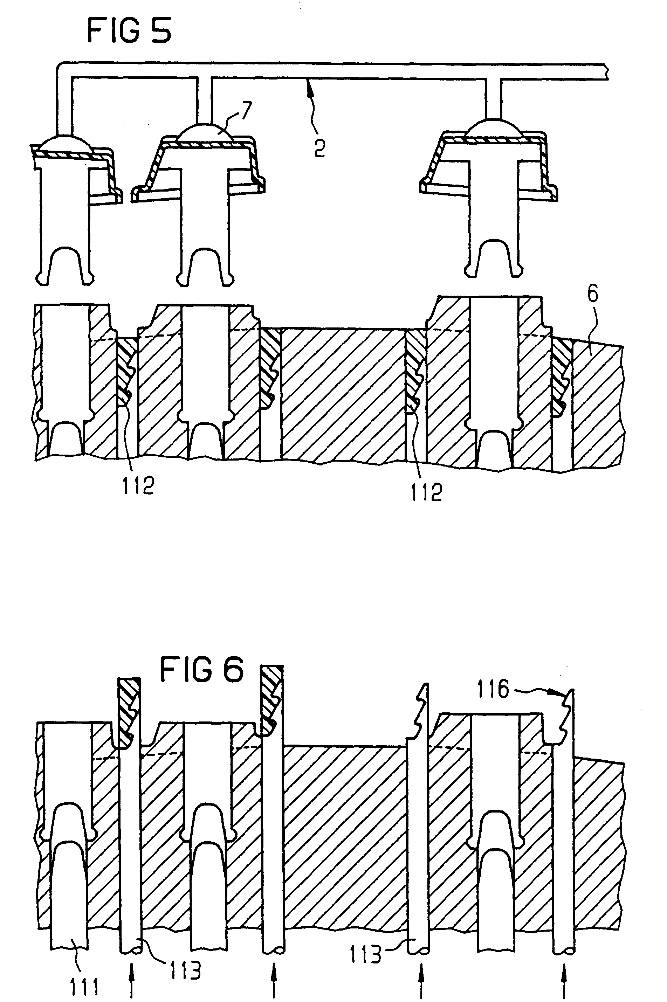

Die Figur 5 zeigt den Zustand, wenn die einzelnen Tastenkörper mit Hilfe der Entnahmevorrichtung 2 aus dem Auswerferteil 6 gezogen werden. Bei diesem Abziehvorgang werden gleichzeitig die Tastenkörper voneinander getrennt. Dies geschieht in der Weise, daß das im Bereich der Füllzylinder 112 verbleibende Kunststoffmaterial durch die Rückhalteelemente der Auswerferstifte 113 zurückgehalten wird, so daß die Tastenkörper an der Sollabrißstelle in Höhe der Tastenkappenunterkante vom Füllzylinder 112 abgerissen werden.

Sobald die Tastenkörper mit Hilfe der Entnahmevorrichtung 2 aus dem Spritzgießwerkzeug heraustransportiert sind, erfolgt der letzte Verfahrensschritt, der in Figur 6 dargestellt ist. Dabei werden die Auswerferstifte 113 so weit ausgefahren, daß das mit Hilfe der Rückhalteelemente in Form von Widerhaken 116 zunächst zurückgehaltene und nunmehr nach außen beförderte Restmaterial von allein herausfällt oder gegebenenfalls abgestreift werden kann, wie dies am Beispiel der beiden rechts dargestellten Auswertestifte 113 ersichtlich ist. Schließlich werden die Auswerferstifte 113 und die Formstifte 111 wieder in ihrer Ausgangslage zurückbewegt, das Spritzgießwerkzeug geschlossen und gegebenenfalls ein neuer Spritzgießvorgang eingeleitet.

## Patentansprüche

1. Spritzgießform für eine Vielzahl von Tastenkörpern (5) oder ähnlichen individuellen Formteilen, deren zugehörige, teils im Düsenteil (104), teils im Auswerferteil (6) der Spritzgieißform vorgesehene Formbereiche unmittelbar bzw. mittelbar mit der Einspritzdüse (106) verbunden sind, derart, daß wenigstens ein erster Formbereich an einem Angußkanal (101) angeschlossen und wenigstens ein zweiter Formbereich über einen Verbindungskanal (103) mit dem jeweils ersten Formbereich verbunden ist,
**dadurch gekennzeichnet**,
daß an der Übergangsstelle von Angußkanal (101) zum ersten Formbereich bzw. zwischen erstem und zweitem Formbereich jeweils ein in den Auswerferteil (6) hineinreichender Füllzylinder (112) vorgesehen ist, in welchem ein mit Rückhalteelement versehener Auswerferstift (113) geführt ist.

2. Spritzgießform nach Anspruch 1,
**dadurch gekennzeichnet**,
daß die Rückhalteelemente des Auswerferstiftes (113) als Widerhaken (116) ausgebildet sind.

3. Spritzgießform nach Anspruch 1 oder 2,
**dadurch gekennzeichnet**,
daß ausgehend von einem Formwerkzeug für eine Tastenkappe (108) mit angeformtem Tastenstößel (109) die entsprechenden Formbereiche im Spritzgießwerkzeug so gestaltet sind, daß die Tastenkappe (108) im Düsenteil (104) und der Tastenstößel (109) teils im Düsenteil (104) und teils im Auswerferteil (6) angeordnet sind.

4. Spritzgießform nach Anspruch 3,
**dadurch gekennzeichnet,**
daß der dem Tastenstößel (109) zugeordnete Formbereich an dem der Tastenkappe (108) gegenüberliegenden Endabschnitt zwei diametral gegenüberstehende, jeweils Rasthaken (110) des Tastenstößels (109) zugeordnete Ausbuchtungen aufweist.

5. Spritzgießform nach Anspruch 3 oder 4,
**dadurch gekennzeichnet,**
daß im Auswerferteil (6) ein in den Endabschnitt des Tastenstößelformbereichs vordringender, koaxial zur Stößelachse ein- und ausfahrbarer Formstift (111) vorgesehen ist.

## Claims

1. Injection mould for a multiplicity of key elements (5) or similar individual moulded parts, the associated mould regions of which, partly provided in the nozzle part (104), partly provided in the ejector part (6) of the injection mould, are connected directly or indirectly to the injection nozzle (106) in such a way that at least a first mould region is connected to a runner (101) and at least a second mould region is connected via a connecting channel (103) to the respectively first mould region, characterized in that at the transition from the runner (101) to the first mould region or between the first mould region and the second mould region there is respectively provided a filling cylinder (112) which reaches into the ejector part (6) and in which an ejector pin (113) provided with a retaining element is guided.

2. Injection mould according to Claim 1, characterized in that the retaining elements of the ejector pin (113) are designed as barbs (116).

3. Injection mould according to Claim 1 or 2, characterized in that, starting from a mould for a key cap (108) with moulded-on key plunger (109), the corresponding mould regions in the injection mould are shaped in such a way that the key cap (108) is arranged in the nozzle part (104) and the key plunger (109) is arranged partly in the nozzle part (104) and partly in the ejector part (6).

4. Injection mould according to Claim 3, characterized in that the mould region assigned to the key plunger (109) has at the end portion lying opposite the key cap (108) two diametrically opposite bulges, respectively assigned to catching hooks (110) of the key plunger (109).

5. Injection mould according to Claim 3 or 4, characterized in that a mould pin (111), which penetrates into the end portion of the key plunger mould region and can be moved in and out coaxially with respect to the plunger axis, is provided in the ejector part (6).

## Revendications

1. Moule d'injection pour une multiplicité de corps de touches (5) ou de pièces moulées individuelles analogues, dont les régions de moulage correspondantes, prévues en partie dans l'élément à buse (104) en partie dans l'élément à éjecteur (6) du moule d'injection, sont reliées directement ou indirectement à la buse d'injection (106) de telle manière qu'au moins une première région de moulage soit raccordée à un canal de coulée (101) et au moins une deuxième région de moulage soit reliée à chaque fois à la première région de moulage par un canal de liaison (103),
caractérisé
en ce que, dans la zone de transition entre le canal de coulée (101) et la première région de moulage, respectivement entre la première et la deuxième régions de moulage, est prévu à chaque fois un cylindre de remplissage (112) qui se prolonge dans l'élément à éjecteur (6) et dans lequel est guidée une tige éjecteur (113) munie d'un élément de retenue.

2. Moule d'injection selon la revendication 1,
caractérisé
en ce que les éléments de retenue de la tige éjecteur (113) sont réalisés sous la forme d'un crochet de retenue (116).

3. Moule d'injection selon la revendication 1 ou 2,
caractérisé
en ce qu'en partant d'un outil de moulage pour un chapeau de touche (108) muni d'un poussoir de touche (109) attaché par moulage, les régions de moulage correspondantes prévues dans l'outil d'injection sont d'une forme telle que le chapeau de touche (108) est disposé dans l'élément à buse (104) et le poussoir de touche (109) en partie dans l'élément à buse (104) et en partie dans l'élément à éjecteur (6).

4. Moule d'injection selon la revendication 3,
caractérisé
en ce que la région de moulage associée au poussoir de touche (109) présente, dans le segment terminal qui est à l'opposé du chapeau de touche (108), deux évidements diamétralement opposés, respectivement associés aux crochets de retenue (110) du poussoir de touche (109).

5. Moule d'injection selon la revendication 3 ou 4,
caractérisé
en ce que, dans l'élément à éjecteur (6) est prévue une tige de moulage (111), qui s'avance dans le segment terminal de la région de moulage du poussoir de touche, et qui peut être engagée et retirée coaxialement à l'axe du poussoir.
